# EUROPEAN PATENT SPECIFICATION

(11) **EP 2 206 623 B1**
(45) Date of publication and mention of the grant of the patent: **09.11.2011**
(21) Application number: 10250016.2
(22) Date of filing: 07.01.2010
(51) Int. Cl.: B60N 2/015, B60P 7/08, B64D 11/06

(54) **Anchorage systems**
Verankerungssysteme
Systèmes d'ancrage

(30) Priority: 07.01.2009 GB 0900194
(43) Date of publication of application: 14.07.2010
(73) Proprietor: C.N. UNWIN LIMITED, Somerset TA12 6EY (GB)
(72) Inventor: Hearn, Gary Alexander, Yeovil BA20 2FE (GB); Johnston-Hyde, Stephen, Beaminster, Dorset DT8 3LE (GB)
(74) Representative: Stoner, Gerard Patrick

(56) References cited:
- WO-A1-2005/028306
- US-A- 5 871 318

## Description

This invention refers to an anchorage system according to the preamble of claim 1. Such a system is known from US5871318 A. It has particular application in anchoring objects in vehicles, such as vehicle furniture e.g. seats, and wheelchair restraints such as straps and the like. The invention further refers to a method for using such a system.

It is well known to adapt the floors of vehicles (such as vans, minibuses and coaches) for the securing of furniture, seating, wheelchairs or other objects at any of a range of locations with variable position according to need. Typically this is by one or more tracks fixed onto or integrated into the vehicle floor. The tracks have an upwardly-open internal channel, usually formed using extruded aluminium, and the top opening of the channel - extending the length of the track - is defined between opposed overhanging lips.

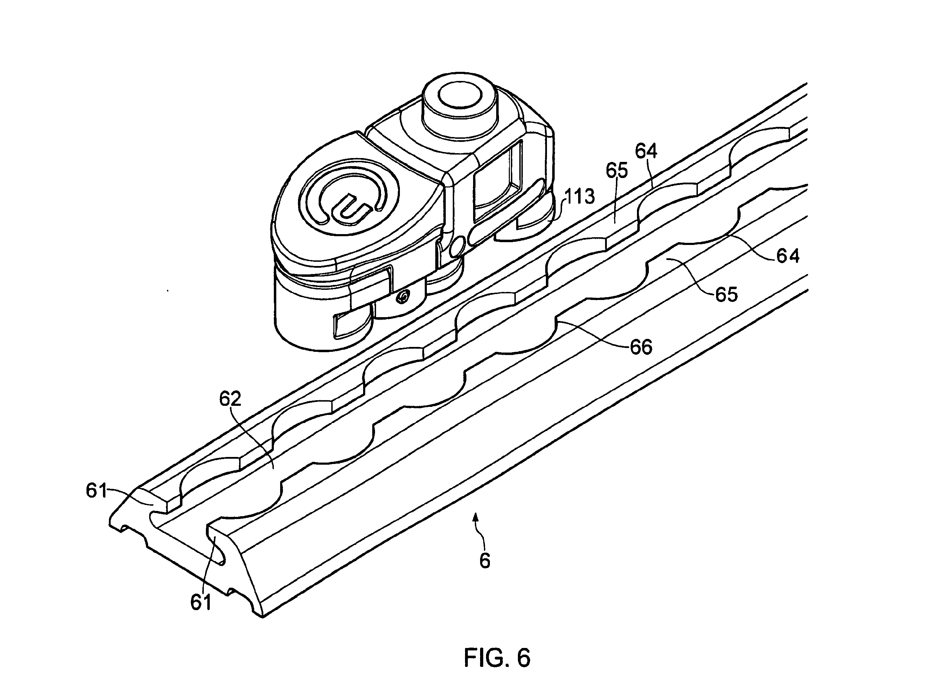

Objects adapted to be retained on the track (anchorages) have enlarged feet or inverted T-portions which can be slid into the track and held captive beneath the opposed lips. The most popular track format (seen in Figure 6) is "scalloped" track 6 in which the channel opening 62 is interrupted by a series of periodic enlargements of a circular outline i.e. each lip 61 has a series of circular arc "cut-outs" 64 opposed to corresponding cut-outs 64 on the opposite lip 61. Anchorages have correspondingly-sized circular feet which can be offered up to the track with the feet aligned with the cut-outs, lowered into the track and then moved along half a step so as to be held captive beneath the narrower parts 65 of the lips. Means are provided for holding the system at this intermediate position so that the attached device cannot escape. Usually this is by means of a sprung plunger of the device disposed half-way between the circular feet, which can be dropped down into one of the circular cut-outs 64 of the track.

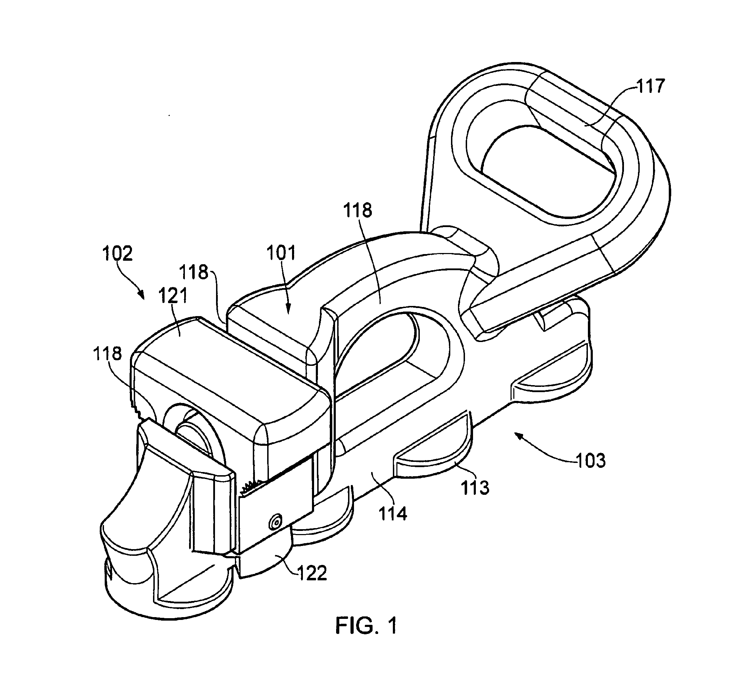

Fig 1 exemplifies an anchorage device of this known type. It has a cast steel body 101 with retaining formations for straps - in this case rings 117, 118 - an anchoring formation 103 along its lower side and a locking plunger 102. The anchoring formation 103 consists of a straight longitudinal bar or keel 114 of uniform with, able to run in the top channel opening 62 of the track. Lateral projections 113 in the form of circular segments are provided at intervals corresponding to the periodicity of the track scallops 64, to either side along the bottom keel 114 and cast integrally with it for strength and simplicity. (There is a well-known alternative in which downward mushroom formations, each with a full circular head and a central stem, project down from a bottom surface of the anchorage body.) The locking plunger 102 has a top grip 121 to be grasped beneath its head by thumb and finger, an internal spring (not shown) urging it to its downward position, and sideways-convex locking portions 122, integral with the head 121, which extend down the sides of the body 101 between two of the feet 113. The device is anchored to track 6 of the Fig 6 type by aligning its feet 113 with the cut-outs 64 of the track, lowering it with the plunger 102 raised, shifting it to a desired position with the feet 113 underlying the lip portions 65 between the cut-outs 64. The plunger 102 is released so that its convex parts 122 engage in a track cut-out and hold the device longitudinally in position.

Thus anchored, the feet 113 resist lifting forces while the convex plunger portions 122 resist longitudinal forces. The body 101 has front and rear buttress surfaces 118 to keep the plunger 102 in alignment and transfer longitudinal forces.

These rail fixing systems are widely used because of their versatility and ease of use. Fixtures do not need to be slid into the track from the end, but can be offered up at any point along its length. One particular use of current importance is in the securing of seating or wheelchairs in vehicles designed for use by elderly and/or disabled people. For example, wheelchairs are conventionally secured by a set of four restraining straps, one at each corner secured by respective anchorages to a pair of parallel tracks at either side of the wheelchair. Each anchorage may be attached to a simple belt or strap with a clip, karabiner or buckle, an adjustable belt, a retractable and/or tensionable belt on a reel or any other suitable device or fitting.

The aim of the present proposals is to provide new and useful anchorage devices which, in a track or rail anchorage system using channels with periodic lateral enlargements ("cut-outs"), provide a new way of engaging with the track, and in particular enable increased strength and reliability in relation to longitudinal loads. In the existing systems, under extreme longitudinal load, concentration of stress at the track cut-out engaged by the plunger 102 may cause failure of the anchorage.

Thus, in a first aspect we propose an anchorage system in which an anchorage device can be releasably fixed to a track. The track has an elongated channel with an upward opening (we say "upward" for convenient description and because the conventional use is in floors, but this should not be taken as limiting the orientation) and has an overhanging retaining lip at one or both sides of the opening, with a series of periodic lateral enlargements (cut-outs). As before, the corresponding anchorage device has a downward anchoring formation with two or more (usually three or more) longitudinally-localised lateral enlargements (feet) at a longitudinal spacing corresponding to the periodicity of the cut-outs. Above each foot the anchorage device has an intermediate downward extension portion which is laterally narrower than the feet. As before, the anchorage device can be offered up to the track with its feet aligned with respective cut-outs ("insertion/removal position") and then shifted along the track to a position ("captive position") in which the feet are out of alignment with the cut-outs and held beneath by the overhanging lip or lips while the intermediate extension portion extends up between the lips.

According to our new proposal, the anchorage device has at least one fixed abutment formation at the intermediate level (i.e. between the top surfaces of the feet and the body above) which extends or projects laterally, so that in the captive position it abuts longitudinally against a shoulder of a corresponding cut-out. These shoulders (exemplified at 66 in Fig. 6) are portions of the cut-outs extending between their laterally widest parts and the intervening narrow parts of the track. Their shape will depend on the shape of the cut-outs, but they will always have some longitudinally-directed component. With the conventional circular arc cut-outs, the cut-out at each lip will have an arc portion constituting the shoulder.

Because the intermediate level abutment extends laterally, is fixed relative to feet and body and meets a cut-out shoulder, it prevents further movement of the anchorage device along the track in that direction. The fixed abutment offers a means of transferring longitudinal load between the device and the track without having to rely on a movably-mounted plunger lowered into a cut-out. Unlike the conventional plunger it can fit directly into the cut-outs in the insertion/removal position.

Preferably such fixed abutments are provided projecting laterally to both sides of the device at the intermediate level. Preferably plural such fixed abutments are provided at locations spaced longitudinally along the anchorage device. It is preferred that the fixed abutments have faces shaped complementarily to the shoulders of the cut-outs. This complementarity provides for the distribution of load (avoidance of point loads), increasing the maximum load. Thus, with arc cut-outs, the fixed abutments desirably have faces which (in horizontal cross-section) are arcuately convex.

The novel fixed abutments need to be appropriately positioned in relation to the periodicity of the feet, so that they meet the corresponding track shoulders when the feet are effectively captive between the track cut-outs. Considering the insertion/retraction position, each foot can be regarded as having a leading portion which will pass first under the track lip as the device is shifted towards the captive position. Relative to the longitudinal position of that leading portion, the fixed abutment (or leading portion thereof) is desirably offset more than half the length of a cut-out (considering this length as the longest distance between the opposed shoulders of a cut-out, at the lip edge). This helps to ensure that substantial foot area is captive beneath the track channel lip when the abutment is engaged.

It will be appreciated that these positions and spacings can be assessed relative to the periodic spacing for possible foot positions, and do not necessarily require both an actual foot and a lateral abutment to be present at the same specific position. However for a compact construction combining strength in relation to both vertical and longitudinal loads, it is preferred that a fixed intermediate level abutment is provided in conjunction with, preferably integral with, a foot of the anchorage device and preferably in conjunction with plural feet, and most preferably in conjunction with each of the feet. This maximises the available abutment area available to take longitudinal loads.

Generally speaking, the feet are provided by lateral enlargements at the base of the above-mentioned intermediate downward extension; effectively the upright of an inverted tee in lateral section. This upright may be the individual central stem of a mushroom-type formation, or more preferably a longitudinally-elongate keel formation extending along one or more respective feet and preferably also between feet. This is known in itself, and is advantageous in enabling the anchoring formation to be formed integrally with the body of the anchorage device by casting. It also lends itself to the formation of integral lateral extensions providing the abutments or longitudinally-directed shoulders which are the special feature proposed here.

Above the intermediate level the form of the body is not critical and is determined largely by the kind of anchoring connection to be provided. This may be in accordance with conventional practice. In a preferred form the body presents a downwardly-directed lower surface portion, e.g. horizontal, facing down onto the intermediate level. It may be present as plural lower surface segments all at one level. Such surface portion may be at a level to rest on top of the track channel lips in the captive position. It may extend out laterally at least as far as the mentioned lateral extension(s), and may meet and support the latter from above e.g. as an integral whole.

Drawing together the preferred features discussed above, a preferred embodiment of our proposals is an anchorage device having a body, three or more regularly longitudinally spaced circular- or arcuate-outline foot portions beneath the body, laterally narrower stem portions connecting vertically between the body and the foot portions and, above a rear extremity of more than one of (and preferably each of) the foot portions, a forwardly-directed arcuately convex lateral shoulder abutment extending laterally outwardly relative to the narrow stem portion, preferably occupying the full height between an upward surface of the foot portion and a bottom (downward-facing) surface of the body. A single metal body casting may provide all of these elements.

Additionally, the anchorage device comprises locking means which, after the device has been moved to the captive position, is operable to hold it against longitudinal displacement back towards the insertion/release position. Desirably, as in known anchorage devices, this comprises a plunger element mounted on or in the body of the device and positioned so that it can be lowered into a cut-out of the track when the device is in the captive position. Desirably, as in previous devices, the plunger is manually operable, and has a spring to bias it to its downward (locking) condition. Unlike previous anchorage devices, the plunger need not be relied on for transferring longitudinal loads. Indeed for longitudinal compactness the plunger may be provided immediately adjacent behind one of the characteristic shoulder abutments of the present proposals, and be limited to engagement against the opposite side of the corresponding cut-out so as to prevent movement of the device back to the release position. The skilled reader will appreciate that anchorage devices of the present proposals have a forward and a reverse direction, and should be installed in the track with the characteristic abutment(s) facing in the direction of the anticipated pull.

An anchorage device of the type described may be used in many situations and with any type or articles are to be secured to tracks of the kind described. However we particularly envisage its use in restraints (e.g. straps, optionally including retractor reels) for use with wheelchairs, mobility scooters and the like. The presently-proposed devices have particular utility in dealing with the ever-higher load-bearing requirements imposed in this field.

Aspects of the invention include the anchorage system as a whole, a vehicle comprising it, anchorage devices of the kind described, and articles comprising such anchorage devices, whether integrally or as an attachment. Preferred embodiments include restraint straps. Further aspects include methods of securing or restraining objects in vehicles, especially to vehicle floors, using anchorage systems and anchorage devices as described.

Embodiments of the invention are now described by way of example, with reference to the accompanying drawings in which:
Fig 1 is a perspective view of a known kind of anchorage device (already described above);
Fig 2 is a corresponding perspective view of an anchorage device embodying our proposals;
Fig 3 is a side elevation of the Fig 2 device;
Fig 4 is an exploded perspective view to show the device components;
Fig 5 is a horizontal section at V-V of Fig 3;
Figs 6 and 7 are oblique views showing the anchorage device being used with scalloped track, and
Fig 8 shows the track with the captive anchorage device sectioned as in Fig 5.

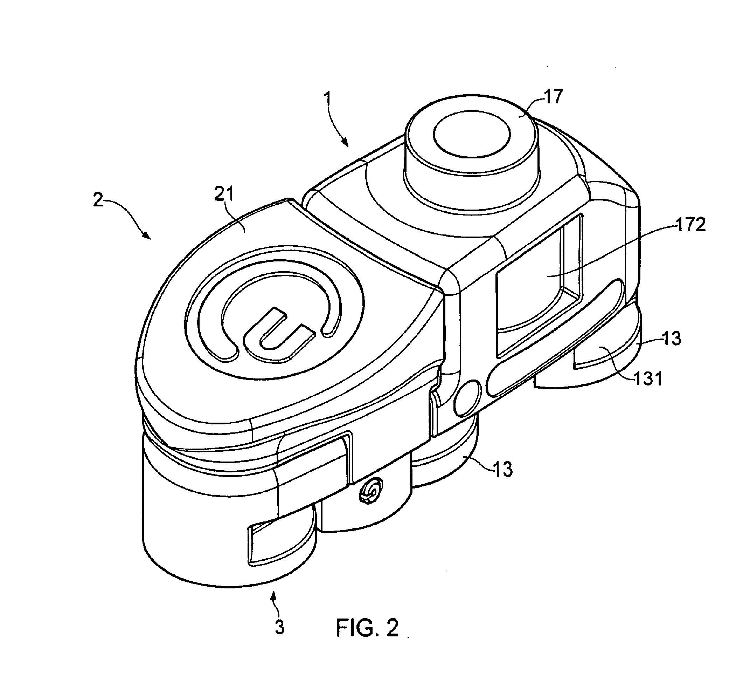

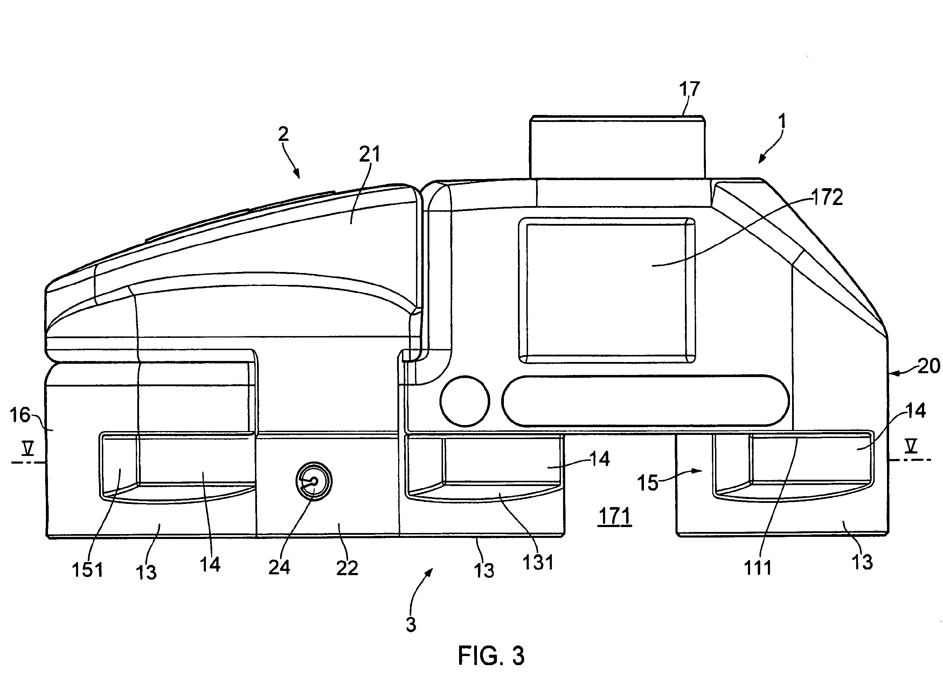

Referring firstly to Figs 2 to 5, an anchorage device according to our present proposals has a cast steel body 1 formed integrally with a lower anchorage formation 3. It also has a locking plunger 2. The body 1 has a front end 20 and a rear end 16 which are functionally distinct, as explained below. Towards the front end 20 the body 1 has a vertical bolt hole 17 for securing a strap mounting or strap retractor reel. A cavity portion 172 beneath the bolt hole houses an internal cavity for a nut, and there is a clearance 171 in the anchorage formation beneath, for access. This is just one example of a kind of securing formation which might be provided on the anchorage device; it could equally be simple apertures such as shown in Fig 1 for the direct attachment of straps, or some other kind of securement, or the body could be formed integrally with some object such as a seat, bracket or frame which is to be secured to the track.

The anchoring formation 3 has a central bar or keel formation 14, as in the Fig 1 device. It will be understood that the precise form of this is not critical provided that it has adequate strength and fits in the narrow portions of the track opening. It is not critical that it is continuous between adjacent feet 13. The lateral foot projections 13 are as seen before, providing feet with an overall circular outline to fit with a practical degree of clearance into the track cut-outs. Again it will be understood that their precise shape is not critical, but that they should maximise the area trapped beneath the track lip in the captive condition. It is not functionally critical that their arcs are circular, but this is usually the appropriate shape because the track cut-outs are conventionally formed by drilling.

The illustrated device has three foot formations 13 at single spacing i.e. no cut-out positions left unoccupied. For many purposes three is a minimum number, but more may be used, sometimes fewer in special cases. There is no strict need for a continuous series i.e. an alternative device might bridge one or more unoccupied cut-outs.

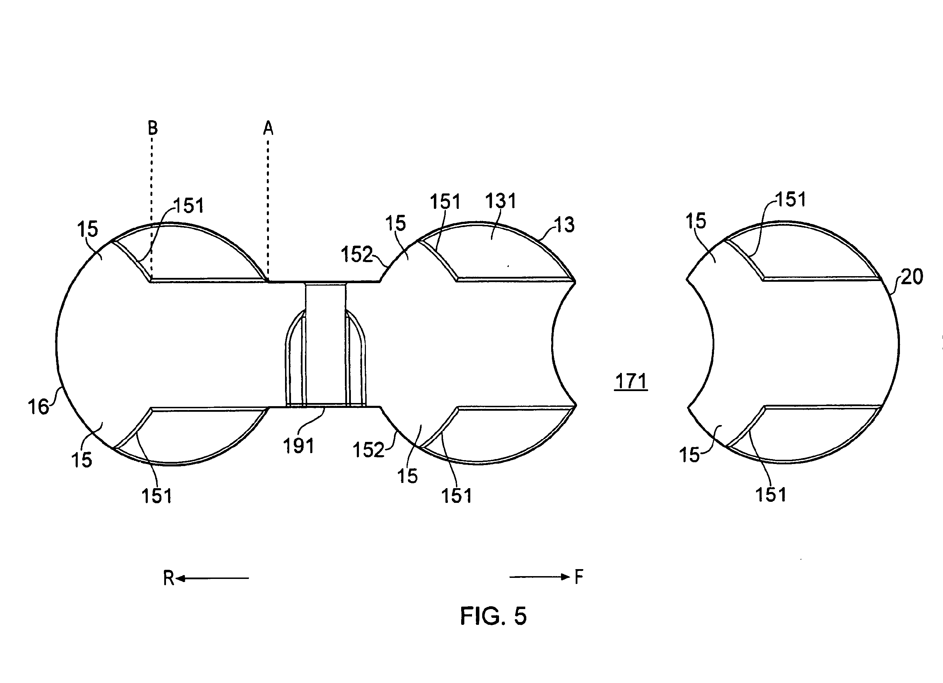

A characteristic feature is the presence of intermediate height lateral extensions 15, disposed symmetrically at either side, with forwardly-directed convex shoulders or abutment surfaces 151. See Fig 5, where the forward and rearward directions F, R are indicated with arrows. The abutment shoulders 151 are integrally cast with the rest of the anchorage formation 3 and extend up from the top surfaces 131 of the feet 13 to meet a flat, wider undersurface 111 of the main body 1.

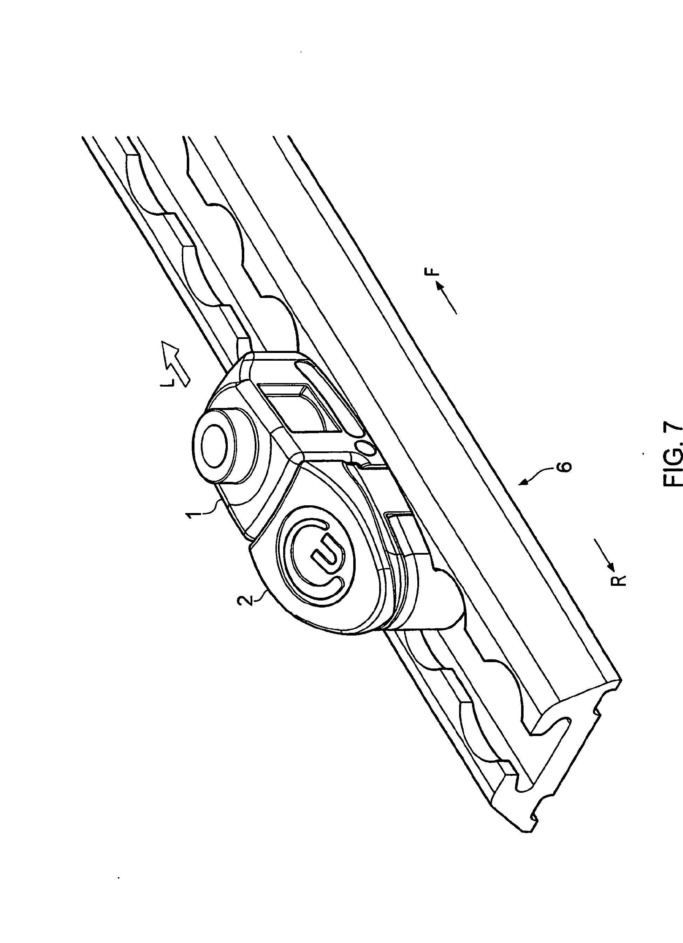

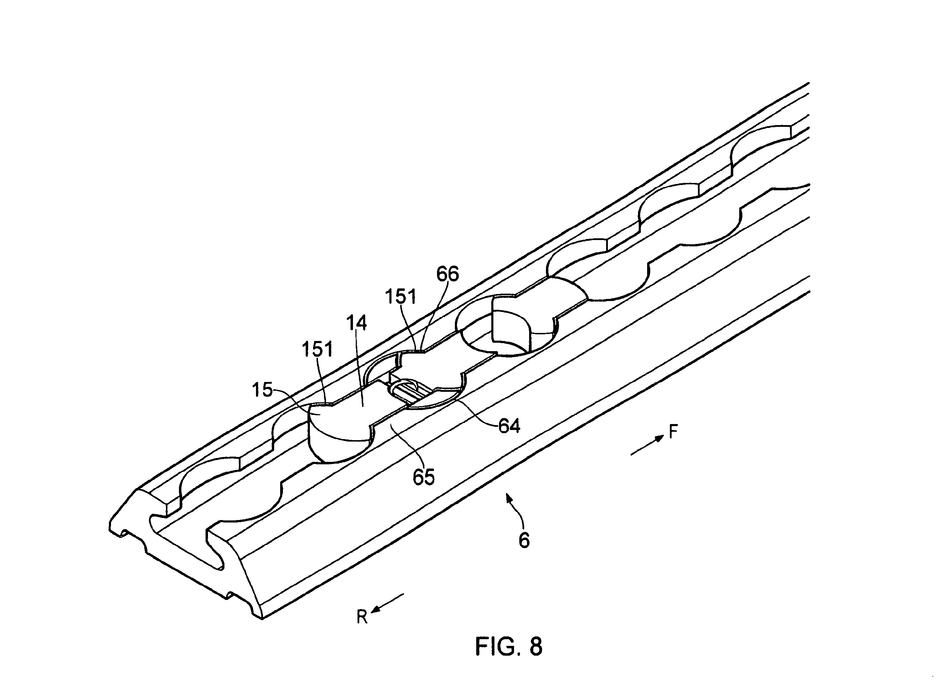

The shoulder surfaces 151 to either side lie on a substantially circular arc. At the left-hand end of Fig 5, the leading portion A of a foot 13 and a leading portion B of an abutment shoulder 151 are indicated. With reference to Figs 6, 7 and 8 it can be seen that the feet 13 are offered up and into the track in the conventional way. The presence of the lateral extensions 15 then prevents free sliding along the track, irrespective of the position of the plunger 2. Rather, the device must be slid forwards and only by a distance corresponding to the distance between A and B, bringing all of the forwardly-directed shoulders 151 into complementary engagement with the edges (shoulders 66) of the corresponding cut-outs 64 as shown in Figs 7 and 8. As a result all six shoulders 151 engage the track to transfer longitudinal load (indicated at arrow L in Fig 7), which is thereby spread over a much larger area than with a single plunger engagement. The plunger 2 is no longer required to withstand longitudinal operational loads, because these are now taken by the fixed shoulders 151, and with the advantage that these fixed formations unlike the plunger are not subject to the tolerances of a movable component.

The rear faces of the lateral extensions 15 are not functional for load bearing. The rearmost face 16 is rounded for convenience and appearance and for conformity with the shape envelope of the foot beneath so that it will fit into the track cut-out with the foot. The rear of the foremost extension 15 is concavely recessed as part of the access 171 to the bolt hole. The centre extension 15 has rearwardly-directed shoulder faces 152 which fit against and guide the plunger 2 as described below.

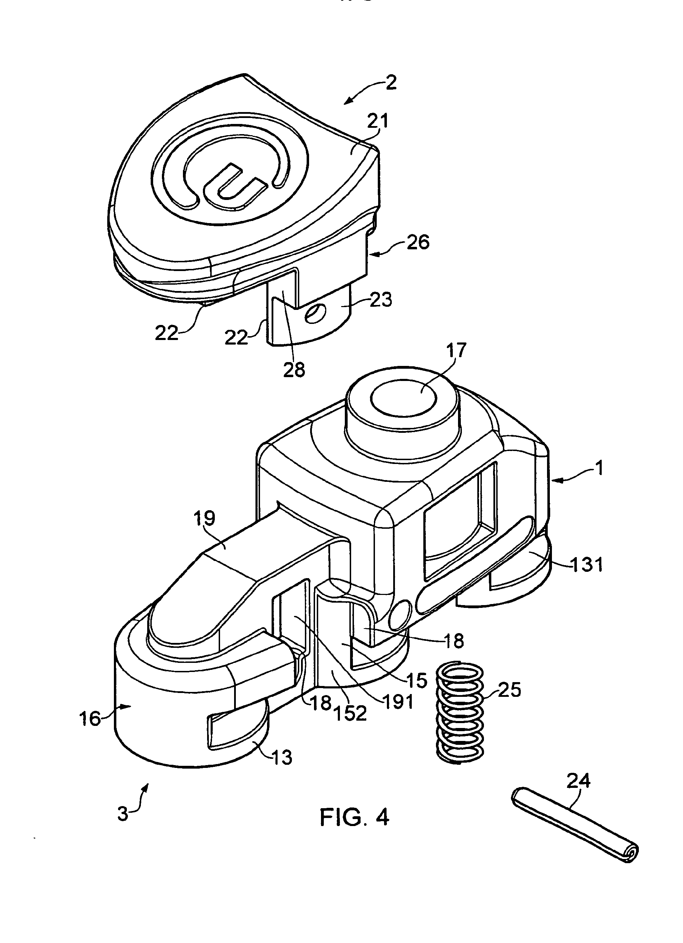

The only role of the plunger 2 is to prevent the device from shifting backwards to the release position, so it can be formed uni-directionally. As conventionally, it has a saddle form and sits vertically slidably on a recessed seat 19 of the body. At the intermediate and foot level, its side limbs 22 have outwardly-convex surfaces 23 directed rearwardly, and front concave inner surfaces (not shown) shaped to fit closely onto the convex rear faces 152 of the central lateral extensions 15 (whose own abutment shoulders 151 are where the forwardly-directed faces of a conventional plunger would have been). Higher up, the plunger limbs have front and rear abutment surfaces 26 which engage corresponding guide buttress surfaces 18 of the body (Fig 4). A plunger retaining pin 24 and biasing spring 25 operate in a central opening 191 of the body in the known way.

## Claims

1. An anchorage system comprising a track (16) and an anchorage device which is releasably fixable to the track (16),
the track (6) having an elongate channel with an upward opening (62) having an overhanging retaining lip (61), at one or both sides, with a series of periodic cut-outs (64),
the anchorage device having a downward anchoring formation (3) with two or more longitudinally-localised lateral enlargements or feet (13) at a longitudinal spacing corresponding to a periodicity of the cut-outs (64), the anchorage device having above each foot (13) an intermediate downward extension portion (14) laterally narrower than the foot (13) whereby the anchorage device can be offered up to the track at an insertion/release position with its feet aligned with respective cut-outs, and shifted along the track to a captive position in which the feet (13), out of alignment with the cut-outs, are held beneath the overhanging lip(s),
the anchorage device further comprising locking means (2) operable to hold the device against longitudinal displacement back along the track from the captive position towards the insertion release position;
**characterised in that** the anchorage device has at least one fixed abutment formation (15,151) at the intermediate level which extends laterally so that in said captive position it abuts longitudinally against a shoulder of a corresponding track cut-out (64) to prevent further movement of the anchorage device along the track in that direction.

2. Anchorage system according to claim 1 in which plural said fixed abutments (15,151) are provided, projecting laterally to both sides of the device at the intermediate level.

3. Anchorage system according to claim 1 or claim 2 in which plural said fixed abutments (15,151) are provided at plural locations spaced longitudinally along the anchorage device.

4. Anchorage system according to claim 1, 2 or 3 in which the or each fixed abutment has a face (151) shaped complementarily to the shoulders of the cut-outs (64) of the track, for example, an arcuately convex face of the fixed abutment to engage arcuate concave cut-out shoulders.

5. Anchorage system according to any one of the preceding claims in which, where a said foot (13) of the anchorage device has a leading portion which passes first under a track lip (61) as the device is shifted towards the captive position, a said fixed abutment (151) corresponding to that foot is offset longitudinally relative to the longitudinal position of the leading portion by more than half the length of a track cut-out (64).

6. Anchorage system according to any one of the preceding claims in which the intermediate downward extension portion (14) is in the form of a longitudinally-elongate keel formation extending along between plural said feet (13), said feet and said at least one fixed abutment (15,151) being formed integrally with the keel formation.

7. Anchorage system according to claim 1 in which the anchorage device has a body (1), three or more regularly longitudinally spaced circular or arcuate-outline foot portions (13) beneath the body and providing said feet of the anchoring formation, a laterally narrower stem portion (14) connecting vertically between the body and each foot portion (13) as said intermediate downward extension portion and, above a rear extremity of more than one of the foot portions (13), a forwardly-directed arcuately convex fixed lateral shoulder abutment (151) extending laterally outwardly relative to the narrow stem portion (14) and providing a said fixed abutment formation.

8. Anchorage system according to claim 7 in which a said shoulder abutment (151) is provided for each of the foot portions (13).

9. Anchorage system according to claim 7 or 8 in which each said lateral shoulder abutment (151) occupies the full height between an upward surface (131) of the foot portion and a downward-facing bottom surface (111) of the body (1).

10. Anchorage system according to any one of claims 7 to 9 in which the body (1) of the anchorage device is or has a single metal casting comprising all of the foot portions (13), stem portions (14) and shoulder abutments (151).

11. Anchorage system according to any one of the preceding claims in which said locking means of the anchorage device comprises a plunger element (2) mounted on a body (1) of the device and positioned so that it can be lowered into a cut-out (64) of the track (6) in the captive position, and the plunger (2) is provided adjacent behind a said fixed abutment formation (151) of the device, so as to engage only rearwardly against a corresponding cut-out shoulder in use.

12. An anchorage device for use in an anchorage system as defined in any one of claims 1 to 11.

13. A restraint strap including an anchorage device according to claim 12.

14. A vehicle comprising an anchorage system as defined in any one of claims 1 to 11.

15. A method of securing or restraining an object in a vehicle using an anchorage system according to any one of claims 1 to 11, comprising the steps: said track (16) is fixed onto or integrated into the vehicle floor; and the anchorage device is releasably fixed to said track to secure or restrain the object.

## Patentansprüche

1. Verankerungssystem, das eine Schiene (16) und eine Verankerungsvorrichtung umfasst, die lösbar an der Schiene (16) fixierbar ist,
wobei die Schiene (6) einen länglichen Kanal mit einer nach oben gerichteten Öffnung (62) aufweist, die an einer oder beiden Seiten einen überhängenden Rückhalterand (61) mit einer Reihe regelmäßiger Ausschnitte (64) aufweist,
wobei die Verankerungsvorrichtung ein nach unten gerichtetes Verankerungsteil (3) mit zwei oder mehreren in Längsrichtung angeordneten, seitlichen Erweiterungen oder Füßen (13) aufweist, die in Längsrichtung so beabstandet sind, dass der Abstand der Periodizität der Ausschnitte (64) entspricht, wobei die Verankerungsvorrichtung über jedem Fuß (13) einen sich in einem mittleren Abschnitt nach unten erstreckenden Erstreckungsabschnitt (14) aufweist, der in Querrichtung schmäler ist als der Fuß (13), wodurch die Verankerungsvorrichtung in einer Einführ-/Freigabeposition in Bezug auf die Schiene angeordnet werden kann, in welcher die Füße in die entsprechenden Ausschnitte eingesetzt sind, und entlang der Schiene in eine Einschnappposition verschoben werden, in der die Füße (13) nicht länger in Bezug auf die Ausschnitte ausgerichtet unter dem überhängenden Rand/den überhängenden Rändern gehalten werden,
wobei die Verankerungsvorrichtung ferner ein Arretiermittel (2) umfasst, das betätigbar ist, um die Vorrichtung gegen eine Verschiebung in Längsrichtung entlang der Schiene aus der Einschnappposition in Richtung der Einführ-/Freigabeposition zu sichern;
**dadurch gekennzeichnet, dass** die Verankerungsvorrichtung zumindest ein fixiertes Anlageteil (15, 151) auf Höhe des mittleren Abschnitts umfasst, das sich seitlich so erstreckt, dass es in Einschnappposition in Längsrichtung an einer Schulter eines entsprechenden Schienenausschnitts (64) anliegt, um eine weitere Bewegung der Verankerungsvorrichtung entlang der Schiene in diese Richtung zu verhindern.

2. Verankerungssystem nach Anspruch 1, worin mehrere solcher fixierten Anlageteile (15, 151) bereitgestellt sind, wobei diese seitlich an beiden Seiten der Vorrichtung auf mittlerer Höhe vorstehen.

3. Verankerungssystem nach Anspruch 1 oder 2, worin mehrere der fixierten Anlageteile (15, 151) an mehreren Stellen bereitgestellt sind, die in Längsrichtung entlang der Verankerungsvorrichtung beabstandet sind.

4. Verankerungssystem nach Anspruch 1, 2 oder 3, worin das oder jedes fixierte Anlageteil eine Fläche (151) aufweist, die komplementär in Bezug auf die Schultern der Ausschnitte (64) der Schiene geformt ist, beispielsweise eine bogenförmig konvexe Fläche des fixierten Anlageteils, um mit bogenförmig konkaven Schultern des Ausschnitts in Eingriff zu gelangen.

5. Verankerungssystem nach einem der vorangegangenen Ansprüche, worin an der Stelle, an der ein Fuß (13) der Verankerungsvorrichtung einen Vorderabschnitt aufweist, der zuerst unter einen Schienenrand (61) geschoben wird, wenn die Vorrichtung in Richtung der Einschnappposition geschoben wird, ein fixiertes Anlageteil (151), das dem Fuß entspricht, in Längsrichtung in Bezug auf die Position des Vorderabschnitts in Längsrichtung um mehr als die Hälfte der Länge eines Schienenausschnitts (64) versetzt ist.

6. Verankerungssystem nach einem der vorangegangenen Ansprüche, worin der nach unten gerichtete Erstreckungsabschnitt (14) im mittleren Abschnitt in Form eines in Längsrichtung länglichen Kielteils vorliegt, das sich zwischen mehreren Füßen (13) erstreckt, wobei die Füße und das zumindest eine fixierte Anlageteil (15, 151) einstückig mit dem Kielteil ausgebildet sind.

7. Verankerungssystem nach Anspruch 1, worin die Verankerungsvorrichtung Folgendes aufweist: einen Körper (1), drei oder mehr regelmäßig in Längsrichtung beabstandete kreisförmige Fußabschnitte oder Fußabschnitte mit bogenförmig gekrümmtem Umriss (13) unterhalb des Körpers, die die Füße des Verankerungsteils bereitstellen, einen in Querrichtung schmäleren Stegabschnitt (14), der als der sich in dem mittleren Abschnitt nach unten ausgerichtete Erstreckungsabschnitt eine vertikale Verbindung zwischen dem Körper und jedem Fußabschnitt (13) herstellt, sowie oberhalb eines hinteren Endes mehr als eines der Fußabschnitte (13) ein nach vorne gerichtetes, bogenförmig konvexes, fixiertes, seitliches Schulteranlageteil (151), das sich seitlich in Bezug auf den schmalen Stegabschnitt (14) nach außen erstreckt und eines der fixierten Anlageteile bereitstellt.

8. Verankerungssystem nach Anspruch 7, worin das Schulteranlageteil (151) für jeden der Fußabschnitte (13) bereitgestellt ist.

9. Verankerungssystem nach Anspruch 7 oder 8, worin jedes der seitlichen Schulteranlageteile (151) die volle Höhe zwischen einer oberen Oberfläche (131) des Fußabschnitts und einer nach unten gerichteten unteren Oberfläche (111) des Körpers (1) einnimmt.

10. Verankerungssystem nach einem der Ansprüche 7 bis 9, worin der Körper (1) der Verankerungsvorrichtung aus einem einstückigen Metallguss besteht oder einen einstückigen Metallguss aufweist, der die Fußabschnitte (13), die Stegabschnitte (14) und die Schulteranlageteile (151) umfasst.

11. Verankerungssystem nach einem der vorangegangenen Ansprüche, worin das Arretiermittel der Verankerungsvorrichtung ein Kolbenelement (2) umfasst, das an einem Körper (1) der Vorrichtung angebracht und so angeordnet ist, dass es in der Einschnappposition in einen Ausschnitt (64) der Schiene (6) abgesenkt werden kann, und der Kolben (2) hinter dem fixierten Anlageteil (151) der Vorrichtung an diese angrenzend angeordnet ist, um bei Verwendung nur hinten mit einer entsprechenden Ausschnittschulter in Eingriff zu gelangen.

12. Verankerungsvorrichtung zur Verwendung in einem Verankerungssystem nach einem der Ansprüche 1 bis 11.

13. Rückhalteband, das eine Verankerungsvorrichtung nach Anspruch 12 umfasst.

14. Fahrzeug, das ein Verankerungssystem nach einem der Ansprüche 1 bis 12 umfasst.

15. Verfahren zum Sichern oder Halten eines Gegenstands in einem Fahrzeug unter Verwendung eines Verankerungssystems nach einem der Ansprüche 1 bis 11, wobei das Verfahren folgende Schritte umfasst: die Schiene (16) wird an dem Fahrzeugboden befestigt oder in diesen integriert und die Verankerungsvorrichtung wird lösbar an der Schiene fixiert, um den Gegenstand zu sichern oder zu halten.

## Revendications

1. Système d'ancrage comprenant un chemin (16) et un dispositif d'ancrage qui peut être fixé amoviblement au chemin (16),
le chemin (16) ayant un canal oblong avec une ouverture vers le haut (62) ayant une lèvre de retenue en surplomb (61), à un ou deux côtés, avec une série de découpures périodiques (64), le dispositif d'ancrage ayant une formation d'ancrage vers le bas (3) avec deux ou plusieurs agrandissements ou pieds latéraux localisés longitudinalement (13) selon un espacement longitudinal correspondant à une périodicité des découpures (64), le dispositif d'ancrage ayant au-dessus de chaque pied (13) une portion d'extension intermédiaire vers le bas (14) latéralement plus étroite que le pied (13) moyennant quoi le dispositif d'ancrage peut être offert au chemin à une position d'insertion/relâchement, ses pieds étant alignés avec les découpures respectives, et déplacé le long du chemin à une position captive dans laquelle les pieds (13), hors d'alignement avec les découpures, sont retenus en dessous de la ou des lèvres en surplomb,
le dispositif d'ancrage comprenant en outre un moyen de verrouillage (2) apte à retenir le dispositif contre un déplacement longitudinal le long du chemin de la position captive vers la position de libération d'insertion;
**caractérisé en ce que** le dispositif d'ancrage comporte au moins une formation de butée fixe (15, 151) au niveau intermédiaire qui s'étend latéralement de sorte que dans ladite position captive, elle bute longitudinalement contre un épaulement d'une découpure de chemin correspondante (64) pour empêcher un mouvement ultérieur du dispositif d'ancrage le long du chemin dans cette direction.

2. Système d'ancrage selon la revendication 1, dans lequel plusieurs butées fixes précitées (15, 151) sont réalisées, faisant saillie latéralement vers les deux côtés du dispositif au niveau intermédiaire.

3. Système d'ancrage selon la revendication 1 ou la revendication 2, dans lequel plusieurs desdites butées fixes (15, 151) sont réalisées à plusieurs emplacements espacés longitudinalement le long du dispositif d'ancrage.

4. Système d'ancrage selon la revendication 1, 2 ou 3, dans lequel la ou chaque butée fixe possède une face (151) configurée d'une manière complémentaire aux épaulements des découpures (64) du chemin, par exemple une face arquée convexe de la butée fixe pour venir en prise avec des épaulements découpés arqués concaves.

5. Système d'ancrage selon l'une des revendications précédentes, dans lequel, où un pied précité (13) du dispositif d'ancrage possède une portion avant qui passe d'abord sous une lèvre de chemin (61) lorsque le dispositif est décalé vers la position captive, une butée fixe précitée (151) correspondant à ce pied est décalée longitudinalement relativement à la position longitudinale de la portion avant selon plus de la moitié de la longueur d'une découpure de chemin (64).

6. Système d'ancrage selon l'une quelconque des revendications précédentes, dans lequel la portion d'extension intermédiaire vers le bas (14) est réalisée sous la forme d'une formation de quille longitudinalement oblongue s'étendant le long entre plusieurs desdits pieds (13), lesdits pieds et ladite au moins une butée fixe (15, 151) étant réalisés intégralement avec la formation de quille.

7. Système d'ancrage selon la revendication 1, dans lequel le dispositif d'ancrage comporte un corps (1), trois ou plusieurs portions de pieds (13) circulaires ou de forme arquée espacées d'une manière régulière longitudinalement en dessous du corps et réalisant lesdits pieds de ladite formation d'ancrage, une portion de tige latéralement plus étroite (14) reliant verticalement, entre le corps et chaque portion de pied (13) comme ladite portion d'extension intermédiaire vers le bas et, au-dessus d'une extrémité arrière de plus d'une des portions de pied (13), une butée d'épaulement latérale fixe (151) dirigée vers l'avant, arquée de manière convexe, s'étendant latéralement vers l'extérieur relativement à la portion de tige étroite (14) et réalisant ladite formation de butée fixe.

8. Système d'ancrage selon la revendication 7, dans lequel une butée d'épaulement précitée (151) est réalisée pour chacune des portions de pied (13).

9. Système d'ancrage selon la revendication 7 ou 8, dans lequel chaque butée d'épaulement latérale (151) occupe la hauteur complète entre une surface vers le haut (131) de la portion de pied et une surface de fond orientée vers le bas (111) du corps (1).

10. Système d'ancrage selon l'une quelconque des revendications 7 à 9, dans lequel le corps (1) du dispositif d'ancrage est ou possède un coulage métallique unique comprenant l'ensemble des portions de pied (13), des portions de tige (14) et des butées d'épaulement (151).

11. Système d'ancrage selon l'une quelconque des revendications précédentes, dans lequel ledit moyen de verrouillage du dispositif d'ancrage comprend un élément de plongeur (2) monté sur un corps (1) du dispositif et positionné pour qu'il puisse être abaissé dans une découpure (64) du chemin (6) dans la position captive, et le plongeur (2) est réalisé d'une manière adjacente derrière ladite formation de butée fixe (151) du dispositif de manière à venir en prise seulement vers l'arrière contre un épaulement découpé correspondant en cours d'utilisation.

12. Dispositif d'ancrage pour utilisation dans un système d'ancrage tel que défini dans l'une quelconque des revendications 1 à 11.

13. Bande de retenue comportant un dispositif d'ancrage selon la revendication 12.

14. Véhicule comprenant un système d'ancrage tel que défini dans l'une quelconque des revendications 1 à 11.

15. Procédé pour fixer ou retenir un objet dans un véhicule en utilisant un système d'ancrage selon l'une quelconque des revendications 1 à 11, comprenant les étapes: ledit chemin (16) est fixé sur ou intégré dans le plancher du véhicule; et le dispositif d'ancrage est fixé amoviblement audit chemin pour immobiliser ou retenir l'objet.
